# EUROPEAN PATENT SPECIFICATION

(11) **EP 2 379 215 B1**
(45) Date of publication and mention of the grant of the patent: **21.05.2014**
(21) Application number: 09801325.3
(22) Date of filing: 18.12.2009
(51) Int. Cl.: B01J 8/00, C10G 2/00

(54) **METHOD FOR FINES MANAGEMENT IN SLURRY PROCESSES**
VERFAHREN ZUM FEINGUTMANAGEMENT BEI SLURRY-VERFAHREN
PROCÉDÉ POUR LA GESTION DES FINES DANS DES PROCÉDÉS À BOUES LIQUIDES

(30) Priority: 18.12.2008 US 203049 P; 20.11.2009 US 592169
(43) Date of publication of application: 26.10.2011
(73) Proprietor: ExxonMobil Research and Engineering Company, Annandale, NJ 08801-0900 (US)
(72) Inventor: SOTO, Jorge L., Centreville VA 20120-5430 (US)
(74) Representative: Troch, Geneviève
(86) International application number: PCT/US2009/006643
(87) International publication number: WO 2010/080133

(56) References cited:
- EP-A1- 1 405 664
- WO-A1-97/31693
- WO-A1-2005/026294
- WO-A1-2007/079031
- US-A1- 2005 109 715

## Description

### FIELD OF THE INVENTION

The present invention relates to a method for managing or controlling the amount of fines in a three-phase slurry reactor. More particularly, the present invention relates to an improved method for controlling the amount of catalyst fines contained in a three-phase, hydrocarbon synthesis slurry bubble reactor.

### BACKGROUND OF THE INVENTION

Three-phase slurry processes; particularly those occurring in bubble columns, are widely reported in scientific literature and, hence, are known to those skilled in the art. An example of such a three-phase slurry process is the production of hydrocarbons by means of the Fischer-Tropsch process.

Typically, a Fischer-Tropsch process is conducted by contacting a stream of synthesis gas (hydrogen and carbon monoxide) with liquid suspension of solid catalyst. The gas phase generally will have an H₂/CO molar ratio of from 1:1 to 3:1. The dispersing liquid is primarily linear hydrocarbon reaction product. The gas is fed into the bottom of a "bubble column reactor" through a gas distributor which produces small gas bubbles that operate to suspend the catalyst particles in the liquid. As the synthesis gas rises through the column, it is converted mainly to hydrocarbon products that are liquids under the reaction temperature and pressure conditions. Those gaseous products that are formed rise to the top of the reactor from which they are removed.

Because it is necessary to maintain the slurry in the reactor at a constant level, liquid products are continuously or intermittently removed from the reactor. In doing so, however, it is important to separate dispersed catalyst particles from the liquid being removed to maintain a constant inventory of catalyst in the reactor. Generally, the separation is conducted in a filtration zone located in the slurry bed. The filtration zone typically comprises cylindrical filtering media through which liquid product passes from the exterior to the interior where it is collected and removed from the reactor. In some reactor designs, liquid product is filtered in an external filtration zone and separated catalyst is returned to the reactor.

One of the problems associated with filtration systems is the decrease in filter efficiency over time which necessitates remedial action such as backwashing the filter media, removing and cleaning the filter element or replacing it. The decrease in filter efficiency is due mainly to the presence in the liquid product of very small catalyst particles known as "fines," which cause filters to plug. The presence of catalyst fines in the reactor is due to the attrition of the catalyst that occurs over time under the turbulent hydrodynamic conditions existing in the reactor vessel. Therefore, it is desirable to maintain the catalyst fines concentration in the slurry reactor at a level where operational problems, like an increase in filtration resistance, are avoided.

U.S. Patent 6,096,789 discloses a process for separating liquid product from solid catalyst in a Fischer-Tropsch slurry process without using filters and instead by using hydrocyclones. In the disclosed process, a slurry of liquid product is sent sequentially to two hydrocyclones, and the solid catalyst recovered in each hydrocyclone is returned to the Fischer-Tropsch reactor.

As is known, hydrocyclones use the principle of centrifugal forces to separate solid particles and fluids based on density, size or shape. There are two types of hydrocyclones, axial and tangential. Both type of hydrocyclones work on the same principles and perform similarly, the difference between them being the manner in which the feed is introduced into the hydrocyclone. Tangential hydrocyclones have a circular main chamber and an inlet for introducing a feed tangentially into the chamber. Hydrocyclones also include a pipe called a vortex finder that penetrates into the main chamber from above. In some designs a tapered cone extends downwardly and terminates at an opening called the apex. In other designs the main chamber communicates with a straight pipe section that terminates in an opening for removal of the underflow stream. When a feed is introduced tangentially into the main chamber, a swirling motion is imparted to the feed causing the more dense phase to proceed outwardly and downwardly through the apex or pipe opening as an underflow stream while the less dense phase moves upwardly through the vortex finder as an overflow stream. Axial hydrocyclones have a circular main chamber and an inlet for introducing a feed axially into the chamber through a series of vanes that impart a rotational motion on the feed. These hydrocyclones also include a pipe called a vortex finder that penetrates into the main chamber. As with the tangential flow hydrocyclones, axial flow hydrocyclones also may terminate in a conical or straight pipe section from the main chamber that terminates at an opening called the apex. When a feed is introduced into the main chamber, a swirling motion is imparted to the feed by a series of vanes at the inlet causing the more dense phase to proceed outwardly and downwardly through the apex as an underflow stream while the less dense phase moves into the vortex finder at the center of the main chamber and is withdrawn trough a conduit connected to the vortex finder.

As noted above, the method of U.S. Patent 6,096,789 uses two hydrocyclones to separate solid catalyst from liquid product. The separated solid catalyst is then returned to the Fischer-Tropsch reactor. Thus, there is no attempt to control the catalyst fines concentration in the slurry reactor at a level where operational problems, like an increase in filtration resistance, are avoided. In contrast, the present invention has as an objective a method for controlling the catalyst fines concentration in a slurry reactor by use of a specifically designed hydrocyclone.

Although hydrocyclones appear simple in structure, experience has shown that the swirling multiphase flow occurring when used in the treatment of a three-phase system represents at best a significant challenge to model mathematically with any reasonable degree of confidence.

### SUMMARY OF THE INVENTION

The present invention provides a method for controlling the amount of fines in a three-phase slurry bubble reactor. The method comprises introducing a portion of the slurry into a hydrocyclone adapted to remove an excess of 98 wt % of the coarse catalyst, and preferably, about 98.5 wt % or more, in the underflow of the hydrocyclone and providing an overflow stream containing catalyst fines. The underflow stream containing coarse catalyst is retained in slurry in the reactor, while the fines containing overflow stream is transferred for disposal or further treatment.

The hydrocyclone employed has an opening for removal of the underflow stream that has an area greater than the area of the opening of the vortex finder.

The various embodiments of the invention will be described in the detailed description which follows.

### BRIEF DESCRIPTION OF THE DRAWINGS

Figure 1 is a schematic illustration of a fines management system for a three-phase slurry process according to the invention.
Figure 2, 3 and 4 are schematic illustrations of hydrocyclones useful in the system.
Figure 5 is a schematic illustration of another embodiment of a fines management system according to the invention.
Figures 6 and 7 are graphs showing the separation efficiency of a 20 wt% solids-loaded slurry with hydrocyclones of different geometries.
Figures 8 and 9 are graphs showing the separation efficiency of a 50 wt% solids-loaded slurry with hydrocyclones of different geometries.

### DETAILED DESCRIPTION OF THE INVENTION

The present invention is applicable to chemical reactions which are carried out in a three-phase slurry reactor. A specific example of such reactions is the Fischer-Tropsch synthesis process, and for convenience, the invention will be described by specific reference to the Fischer-Tropsch hydrocarbon synthesis process.

Suitably, the reactor for the Fischer-Tropsch synthesis process is a bubble reactor comprising a vertical vessel for containing a catalyst suspended in a liquid phase through which synthesis gas is bubbled.

Also suitably, the reactor will include one or more gas disengaging vertical downcomers which assist in the circulation of slurry through the reactor.

Typically, the reactor also will contain a filtration system comprising one or more porous filter media which permit liquid product to pass through for removal. Optionally, of course, the filter system may be located outside of the reactor. In either instance, the filtrate normally is sent to further processing and upgrading.

As indicated previously, the synthesis gas comprises H₂ and CO in the molar ratio of 1:1 to 3:1 and preferably 2.1:1.

Any catalyst capable of being active in the Fischer-Tropsch reaction can be used in the present invention. Preferably, the catalyst will comprise effective amounts of Co and one or more of Re, Ru, Fe, Ni. Th, Zr, Hf, U, Mg and La on a suitable inorganic support material. Those linear hydrocarbon reaction products that are liquids at reaction conditions comprise the slurry liquid in the reactor.

The Fischer-Tropsch reaction is carried out at temperatures, pressures, and hourly gas space velocities in the range of about 160-454 °C (320° - 850°F), 552-4140 kPA (80 - 600 psi) and 100 - 40,000 V/hr/V, expressed as standard volumes of the syngas mixture (0°C, 1 atm) per hour per volume of catalyst, respectively.

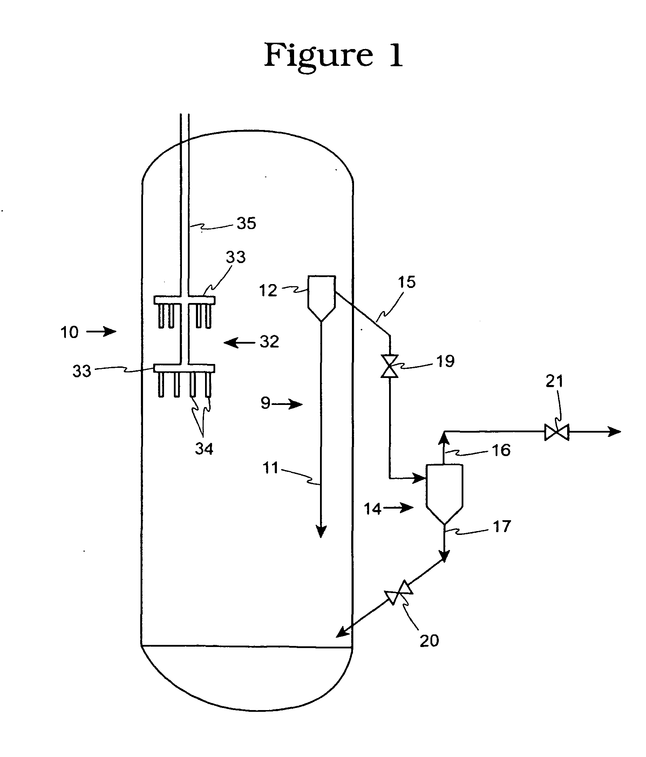

For convenience, the method and system will be described by reference to the tangential hydrocyclone shown in Figures 1; however, the principles involved herein are equally applicable to axial hydrocyclones, and hence, the invention is not limited to tangential hydrocyclones. As shown in Figure 1, the fines withdrawal system comprises a downcomer 9 located within bubble column reactor vessel 10. Downcomer 9 comprises section 11 that is provided with gas disengaging top cup 12. A hydrocyclone 14 is at its tangential top opening in operable communication with gas disengaging cup 12 of downcomer 11 via conduit 15.

As shown in Figure 1, hydrocyclone 14 has a top conduit 16 for removal of an overflow stream and a bottom conduit 17 for removal of an underflow stream.

Optionally, hydrocyclone 14 may be located within reactor 10, but preferably, it is located outside of reactor 10 as shown in Figure 1.

Also as shown in Figure 1, conduit 17 is in operable communication with vessel 10.

Valves 19 and 20 may be provided, as shown, for metering degassed slurry from cup 12 to through hydrocyclone 14 when required.

In operation, a fines-laden stream, for example, containing fines from about 0.05 wt% of catalyst to about 1.00 wt% of catalyst is withdrawn from gas disengaging cup 12 and fed to hydrocyclone 14. Basically, the rate of withdrawal from cup 12 will be a function of the downcomer hydraulics. In any event, an overflow stream rich in fines is removed from the hydrocyclone for further concentration and separation while the underflow stream rich in bulk catalyst is returned to the reactor 10.

By bulk catalyst is meant catalyst particles having a diameter equal to or above about 10 µm, for example, in the range of about 10 to 200 µm and preferably 20 to 150 µm.

By fines is meant solid particles having a diameter below about 10 µm, usually with a diameter less than about 1 µm.

As shown in Figure 1, a valve 21 may be provided for controlling when slurry is withdrawn from the downcomer.

Typical hydrocyclones that are used for solid/liquids separations are designed using apex diameters that are smaller than the diameter of the vortex finder. This can result in overflow stream flow rates that are larger than the underflow stream, and if too much liquid is removed through the overflow, the concentration of coarse catalyst in the conical section of the hydrocyclone can reach concentrations similar to settled catalyst. At these high concentrations, the flow rate of the underflow through the apex may be reduced or even stopped. This forces coarse catalyst out of the overflow, reducing coarse catalyst recovery.

As noted earlier, one aspect of the present invention is to use a hydrocyclone adapted to remove in excess of about 98 wt % of the coarse catalyst, and preferably about 98.5 wt % or more, in the hydrocyclone underflow stream over a range of slurry solids loading, over a solids loading range of 11 wt% to 55 wt% and a fines level of 0.40 wt% of catalyst or more in the hydrocyclone feed stream.

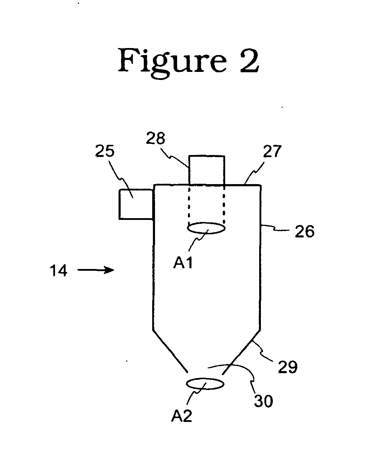

In the invention, the hydrocyclone used in controlling fines concentration in a three-phase slurry column will have a terminal opening for removing the underflow stream that has an area greater than the area of the opening of the vortex finder. Such a suitable hydrocyclone is shown in Figure 2.

As illustrated in Figure 2, the hydrocyclone 14 used in the invention comprises a tangential inlet 25 for introducing a liquid slurry of fine and coarse particles into a cylindrical main chamber 26. The main chamber 26 has a top 27 through which top 27 an axial pipe or vortex finder 28 extends into chamber 26. Depending from chamber 26 is a conical section 29 terminating at a bottom opening or apex 30. The vortex finder 28 serves to remove an overflow stream containing suspended fines, while the apex 30 serves to remove an underflow stream containing coarse catalyst particles. The invention can also be implemented using an axial hydrocyclone.

The vortex finder is shown as having an opening having an area A1 and the apex opening as having an area A2. In the present invention the ratio of A2 to A1 is greater than 1.00 and preferably is greater than about 1.56, for example up to about 2.25 in order to efficiently separate the coarse solids when the slurry contains a high loading of solids. Indeed, hydrocyclones having the requisite area ratios are suitable for controlling the slurry reactor fines content at slurry solid loadings over a range of solid loadings of from about 11 wt % to about 55 wt % and are particularly preferred for use at solid loadings above about 40 wt %, and especially at loadings of about 50 wt % to about 55 wt %.

Referring back to Figure 1, the hydrocyclone of Figure 2 is used to control the accumulation of catalyst fines in the slurry reactor 10. Thus, the slurry reactor system includes a hydrocyclone 14 for receiving reactor slurry via line 15. Hydrocyclone 14 is adapted to provide an underflow stream containing greater than about 98 wt % and greater than 98.5 wt% of coarse catalyst and is operated to provide a pressure drop from feed to underflow or overflow greater than 34,45 kPA (5 psi) and preferably greater than about 68,90 kPA (10 psi) up to about 241 kPA (35 psi). This underflow stream is returned to the reactor 10 via line 17. The overflow stream from hydrocyclone 14 is removed via line 16 for disposal or further treatment, such as separating the fines from the liquid in that stream. Advantageously, little, if any, coarse catalyst is contained in the overflow stream, and consequently, the need for additional processing steps to recover coarse catalyst is avoided. Moreover, the concentration of catalyst fines in the reactor is maintained at acceptable low levels permitting efficient operation of the main product/catalyst separation system.

In the Figure 1 embodiment, the main catalyst/product separation system is shown as a filter bundle 32 positioned within reactor 10. The filter bundle 32 comprises plenums 33 with a plurality of vertically disposed elongated hollow filter elements 34 joined to and opening into the plenums 33. A collection conduit 35 is provided for removal of filtrate from reactor 10.

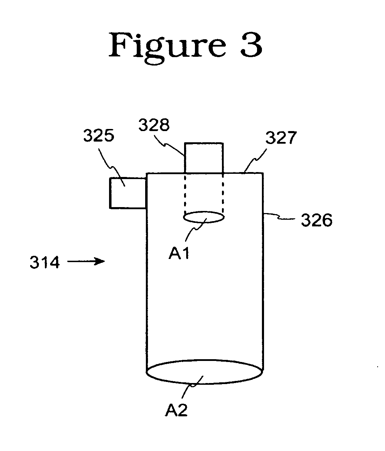

Figure 3 illustrates a tangential flow hydrocyclone also suitable for use in the invention. In this instance the hydrocyclone does not have a conical portion. As shown, the hydrocyclone 314 has a tangential inlet 325 and a cylindrical main chamber 326. The main chamber 326 has a top 327 through which the vortex finder 328 has an opening having an area A1. Chamber 326 terminates at its distal end in an opening for removal of an underflow stream, which opening has an area A2.

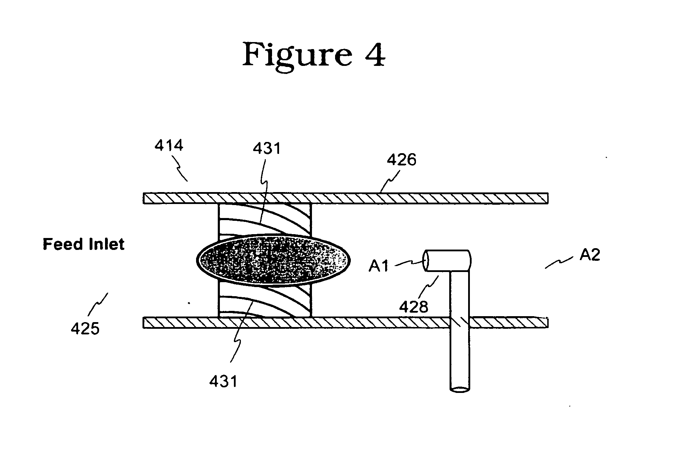

Figure 4 schematically illustrates one type of axial flow hydrocyclone useful in the present invention. As is shown, hydrocyclone 414 has an axial inlet 425 for introducing feed into the hydrocyclone. A series of vanes 431 are located at the inlet end of the main chamber 426 to impart swirling motion to the feed. A vortex finder 428 is positioned within the main chamber 426. The opening in the vortex finder 428 has an area A1, and the main chamber 426 has an opening at its distal end, which opening has an opening with an area A2 for removing an underflow stream.

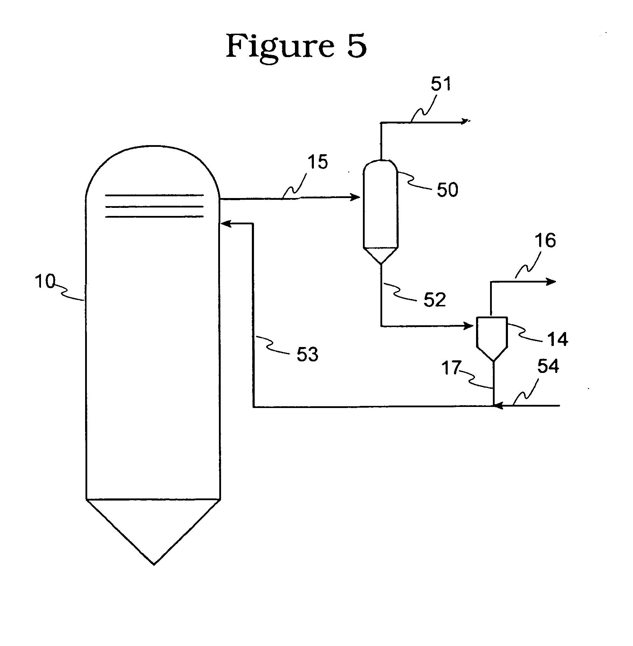

In an alternate and preferred embodiment of the invention shown in Figure 5, a catalyst-containing slurry stream is removed from the top of vessel 10 via line 15. The removed slurry is then degassed in degassing vessel 50 in which gas is removed via overhead line 51, and degassed slurry is fed via line 52 to a hydrocyclone 14. As in the Figure 1 embodiment, hydrocyclone 14 has a top conduit 16 for removal of an overflow stream and a bottom conduit 17 for removal of an underflow stream. A riser 53 is in communication with conduit 17 and vessel 10 for returning the underflow stream 17 to vessel 10 by the injection of a hydrogen-containing gas or an inert gas into the riser 53 via line 54.

### Examples

In the examples which follow, a series of solids separations were conducted using three different tangential cyclone geometries. Each had a conical portion terminating at an apex opening as shown in Figure 2. The ratios of apex opening area to the vortex finder opening area were 0.88, 1.56 and 2.56, respectively.

### Example 1

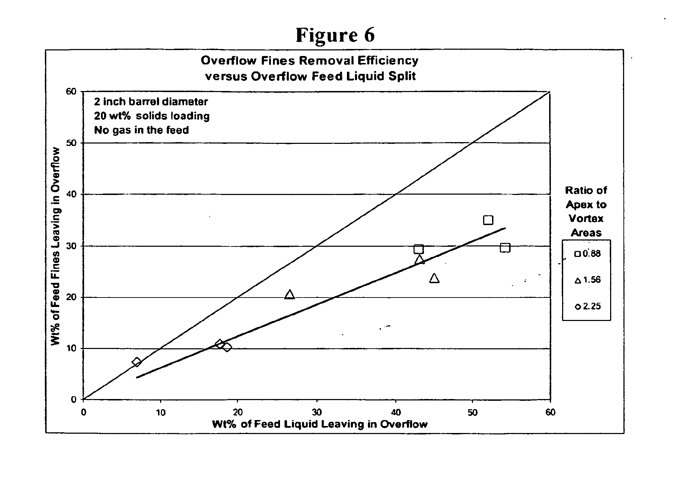

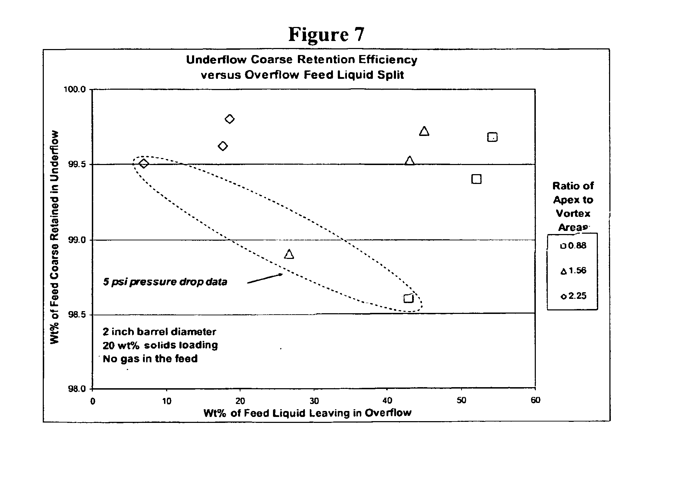

In this series of separations, the solids were slurried in a liquid at 20 wt% solids loading. The results of the tests are given in Figures 6 and 7.

Figure 6 shows the overflow fines removal efficiency for each of the hydrocyclones. As can be seen, all hydrocyclone geometries can remove fines from the system at similar efficiency. Figure 7 shows the underflow coarse solids retention efficiency for each of the hydrocyclones. Figure 7 illustrates higher coarse retention efficiency is achieved with a hydrocyclone that has an apex area greater than the vortex finder area. The data also illustrates that operating the hydrocyclone at a pressure drop higher than about 5 psi is desirable to achieve high recoveries of coarse solids.

### Example 2

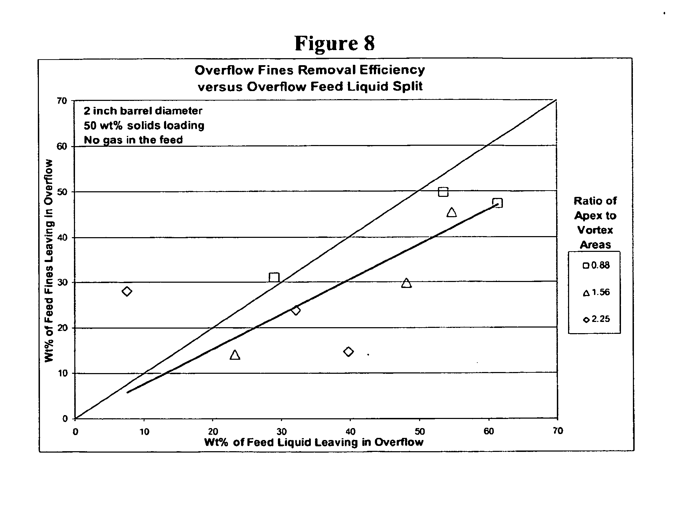

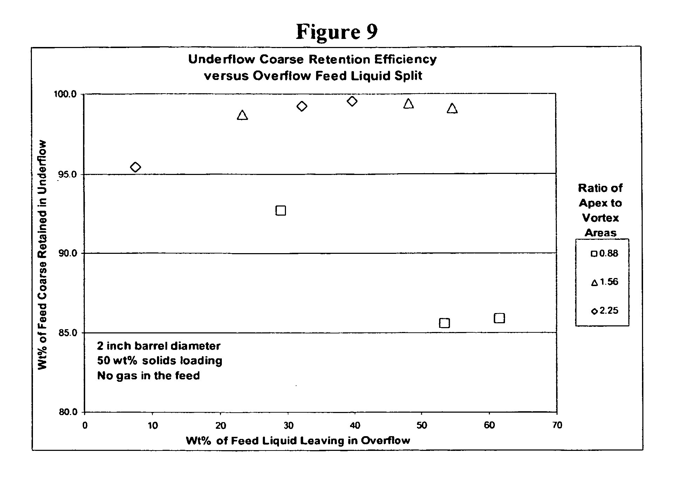

A series of separations similar to Example 1 was conducted except that the slurry had a solids loading of 50 wt %. As can be seen in Figure 8, all hydrocyclone geometries remove fines from the system at similar efficiency. However, Figure 9 shows that only hydrocyclones having an apex area greater than the area of the vortex finder are able to achieve coarse catalyst recoveries of about 98 wt % when operated at a pressure drops greater than about 10 psi.

## Claims

1. A method for controlling the content of catalyst fines particles in a slurry bubble column reactor (10) comprising feeding a portion of the reactor slurry through a hydrocyclone (14) to provide an overflow stream of fine particles and an underflow stream of coarse particles, returning the underflow stream to the slurry reactor and passing the overflow stream to a point other than the slurry reactor, **characterised in that** the portion of reactor slurry contains from 11 to 55 wt% of solids with at least 0.4 wt% of fine particles having a diameter less than 10 µm and is fed through the hydrocyclone having a ratio of the apex (30) opening area (A2) for removal of the underflow stream to the vortex finder (28) opening area (A1) for removal of the overflow stream greater than 1 under conditions sufficient to provide a pressure drop from feed to underflow or overflow stream of greater than 34.45 kPa (5 psi) and recover greater than 98 wt % of the coarse catalyst particles having a diameter equal to or above 10µm in the underflow stream.

2. The method of claim 1, wherein the ratio of A2 to A1 is greater than 1.5.

3. The method of claim 1, wherein the pressure drop from feed to underflow or overflow stream is greater than 68.9 kPa (10 psi) and up to 241.3 kPa (35 psi).

4. The method of any preceding claims, applied to a Fischer-Tropsch hydrocarbon synthesis process in which synthesis gas is reacted in a slurry bubble column reactor containing catalyst particles suspended in liquid product.

## Patentansprüche

1. Verfahren zum Kontrollieren des Gehalts an Katalysatorfeinteilchen i n einem Aufschlämmungsblasensäulenreaktor (10), bei dem ein Teil der Reaktoraufschlämmung durch einen Hydrozyklon (14) geführt wird, um einen Überflussstrom von Feinteilchen und einen Unterflussstrom von groben Teilchen zu liefern, der Unterflussstrom in den Aufschlämmungsreaktor zurückgeführt wird und der Überflussstrom zu einem anderen Punkt als dem Aufschlämmungsreaktor geführt wird, **dadurch gekennzeichnet, dass** der Teil an Reaktoraufschlämmung 11 bis 55 Gew.-% Feststoff mit mindestens 0,4 Gew.-% Feinteilchen mit einem Durchmesser kleiner 10 µm enthält und durch den Hydrozyklon mit einem Verhältnis von der Apex (30) Öffnungsfläche (A2) zur Entfernung des Unterflussstroms zu der Vortexfinder (28) Öffnungsfläche (A1) zur Entfernung des Überflussstroms größer als 1 unter Bedingungen geführt wird, die ausreichen, um einen Druckabfall vom Einsatzmaterialstrom zum Unterflussstrom oder Oberflussstrom größer 34,45 kPa (4 psi) zu liefern, und mehr als 98 Gew.-% der groben Katalysatorteilchen mit einem Durchmesser gleich oder über 10 µm in dem Unterflussstrom zu gewinnen.

2. Verfahren nach Anspruch 1, bei dem das Verhältnis von A2 zu A1 größer als 1,5 ist.

3. Verfahren nach Anspruch 1, bei dem der Druckabfall vom Einsatzmaterialstrom zum Unterflussstrom oder Überflussstrom größer als 68,9 kPa (10 psi) und bis zu 241,3 kPa (psi) beträgt.

4. Verfahren nach einem der vorhergehenden Ansprüche angewendet auf ein Fischer-Tropsch-Kohlenwasserstoffsynthesever-fahren, bei dem Synthesegas in einem Aufschlämmungsblasensäulenreaktor umgesetzt wird, der Katalysatorteilchen suspendiert in flüssigem Produkt enthält.

## Revendications

1. Procédé de régulation de la teneur en particules de fines de catalyseur dans un réacteur à boues liquides à colonne à bulles (10) comprenant le chargement d'une partie des boues liquides du réacteur à travers un hydrocyclone (14) pour obtenir un courant de surverse de particules de fines et un courant de sousverse de particules grossières, le renvoi du courant de sousverse vers le réacteur à boues liquides et le passage du courant de surverse vers un point autre que le réacteur à boues liquides, **caractérisé en ce que** la partie de boues liquides du réacteur contient de 11 à 55 % en poids de matières sèches, au moins 0,4 % en poids des particules de fines ayant un diamètre de moins de 10 µm, et est chargée à travers l'hydrocyclone présentant un rapport entre la section d'ouverture (A2) du sommet (30) permettant d'éliminer le courant de sousverse et la section d'ouverture (A1) du diaphragme (28) permettant d'éliminer le courant de surverse supérieur à 1 dans des conditions suffisantes pour obtenir une chute de pression entre l'alimentation et le courant de sousverse ou de surverse de plus de 34,45 kPa (5 psi) et récupérer plus de 98 % en poids des particules de catalyseur grossières ayant un diamètre supérieur ou égal à 10 µm dans le courant de sousverse.

2. Procédé selon la revendication 1, dans lequel le rapport A2/A1 est supérieur à 1,5.

3. Procédé selon la revendication 1, dans lequel la chute de pression entre l'alimentation et le courant de sousverse ou de surverse est supérieure à 68,9 kPa (10 psi) et peut atteindre 241,3 kPa (35 psi).

4. Procédé selon l'une quelconque des revendications précédentes, appliqué à un procédé de synthèse des hydrocarbures de Fischer-Tropsch dans lequel du gaz de synthèse est mis à réagir dans un réacteur à boues liquides à colonne à bulles contenant des particules de catalyseur en suspension dans un produit liquide.
